# EUROPÄISCHE PATENTANMELDUNG

(11) **EP 3 854 735 A1**
(43) Veröffentlichungstag der Anmeldung: **28.07.2021**
(21) Anmeldenummer: 20153600.0
(22) Anmeldetag: 24.01.2020
(51) Int. Cl.: B65G 47/91, B25J 15/00, B25J 15/06

(54) **SAUGGREIFER ZUM HANDHABEN VON KLEINSTÜCKGÜTERN**

(71) Anmelder: Becton Dickinson Rowa Germany GmbH, 53539 Kelberg (DE)
(72) Erfinder: GROß, Dietmar, 53539 Kelberg (DE)
(74) Vertreter: Zenz Patentanwälte Partnerschaft mbB

(57) **Zusammenfassung**

Sauggreifer (1) zum Handhaben von Kleinstückgütern, aufweisend ein Grundelement (10), einen an dem Grundelement (10) angeordneten Drehantrieb (20) mit einer in Ausgangsposition vertikalen Drehachse (22), eine mit der Drehachse (22) gekoppelte Endeffektoreinheit (100), wobei die Endeffektoreinheit (100) ein Halteelement (110) aufweist, an welchem eine Saugarmhalterung (120) befestigt ist, wobei die Saugarmhalterung (120) zumindest zwei langgestreckte Saugarme (130, 140) aufweist, die bei ihrem distalen Ende jeweils einen Saugkopf (131, 141) mit einer Saugfläche (132, 142) aufweisen, wobei die Saugarme (130, 140) derart ausgebildet sind, dass sie mit einem Unterdruck beaufschlagt werden können wobei die Saugarmhalterung (120) drehbar an dem Halteelement (110) gelagert ist und die Saugflächen (132, 142) der Saugköpfe (131, 141) zum Handhaben unterschiedlicher Arten von Kleinstückgütern unterschiedlich dimensioniert sind

## Beschreibung

Die vorliegende Erfindung betrifft einen Sauggreifer zum Handhaben von Kleinstückgütern, wobei es sich bei diesen Kleinstückgütern insbesondere um Arzneimittelpackungen handelt.

Aus dem Stand der Technik sind zahlreiche Sauggreifer bekannt, wobei diese insbesondere zur Handhabung von Papierprodukten verwendet werden. Aufgrund der Tatsache, dass diese Papierprodukte stets großflächig und relativ leicht sind, sind die zum Handhaben von Papiergütern verwendeten Sauggreifer ungeeignet, Stückgüter unterschiedlicher Größe und/oder unterschiedlichen Gewichts zu handhaben.

Es ist Aufgabe der vorliegenden Erfindung, einen Sauggreifer bereitzustellen, mit welchem Kleinstückgüter unterschiedlicher Größe und/oder unterschiedlichen Gewichts sicher gehandhabt werden können.

Die Aufgabe wird erfindungsgemäß gelöst durch einen Sauggreifer gemäß Patentanspruch 1. Der erfindungsgemäße Sauggreifer zum Handhaben von Kleinstückgütern, insbesondere Arzneimittelpackungen, umfasst ein Grundelement, über welches der Sauggreifer an einem Manipulator befestigt werden kann. Mit diesem Manipulator ist der Sauggreifer regelmäßig in drei Dimensionen frei im Raum bewegbar. An dem Grundelement des Sauggreifers ist ein Drehantrieb mit einer in Ausgangsposition des Sauggreifers vertikalen Drehachse angeordnet. Wenn im Zuge dieser Patentanmeldung von der Ausrichtung von Achsen die Rede ist, ist diese Ausrichtung bezogen auf die vertikale Drehachse des an dem Grundelement angeordneten Drehantriebs. Mit Ausgangsposition des Sauggreifers ist gemeint, dass sich die Drehachse in vertikaler Z-Richtung erstreckt.

Mit der vorgenannten Drehachse ist eine Endeffektoreinheit gekoppelt, wobei diese Endeffektoreinheit ein Halteelement aufweist, an welchem wiederum eine Saugarmhalterung befestigt ist, wobei die Saugarmhalterung zumindest zwei langgestreckte Saugarme aufweist, die bei ihrem distalen Ende jeweils einen Saugkopf mit einer Saugfläche aufweisen. Die Saugarme sind derart ausgebildet, dass diese mit einem Unterdruck beaufschlagt werden können. Wie diese Beaufschlagung mit Unterdruck im Einzelnen durchgeführt wird, ist für die Erfindung als solche nicht wesentlich, dem Fachmann sind diverse Methoden dazu bekannt. So kann z. B. über eine zentrale Zuführung über ein in der Saugarmhalterung angeordnetes Ventil ein Saugarm gezielt mit Unterdruck beaufschlagt werden. Alternativ ist es denkbar, dass der Luftdurchsatz der Saugköpfe so gering gehalten wird, dass eine zentrale Beaufschlagung mit Unterdruck ausreichend ist. Gemäß einer weiteren Alternative kann jeder Saugarm separat mit Unterdruck beaufschlagbar sein.

Erfindungsgemäß ist es vorgesehen, dass die Saugarmhalterung drehbar an dem Halteelement gelagert ist und die Saugflächen der Saugköpfe zum Handhaben unterschiedlicher Arten von Kleinstückgütern unterschiedlich dimensioniert sind. Die erfindungsgemäße Ausgestaltung der Saugarmhalterung sowie der Saugköpfe ermöglicht es, durch einfaches Drehen der Saugarmhalterung den Saugkopf in Position zu bringen, der zum Handhaben des nächsten aufzunehmenden Kleinstückgutes am besten geeignet ist. Damit der Sauggreifer überhaupt in der Lage ist, ein Kleinstückgut auf einem unsortierten Haufen von Kleinstückgütern aufzunehmen, ist eine Detektion dieser Ansammlung von Kleinstückgütern notwendig, und es ist darüber hinaus festzulegen, welche Fläche welches Kleinstückgutes als nächste zur Handhabung eines Kleinstückgutes anzufahren ist. Zur Detektion kann man beispielsweise eine Bilderkennung und zusätzlich oder alternativ eine Höhenmessung per Laser durchführen. Die dazu notwendigen Vorrichtungen und Verfahren sind jedoch nicht Teil der vorliegenden Patentanmeldung, sondern liefern lediglich Informationen, wie der erfindungsgemäße Sauggreifer anzusteuern ist. In Abhängigkeit von der als nächstes zu handhabenden Fläche kann erfindungsgemäß rasch ein Saugkopf ausgewählt werden, der dazu am besten geeignet ist. Wenn die Fläche des zu handhabenden Kleinstückgutes beispielsweise relativ groß ist, ist es sinnvoll, einen Saugkopf mit einer großen Saugfläche durch entsprechendes Drehen der Saugarmhalterung in Position zu bringen. Ist die Fläche hingegen relativ klein, beispielsweise die Seitenfläche einer Arzneimittelpackung, ist es sinnvoll, einen Saugkopf mit geringer Saugfläche zu verwenden. Insbesondere wenn mit dem Sauggreifer Kleinstückgüter von einem wahllos zusammengestellten Haufen entnommen werden sollen, ist der erfindungsgemäße Sauggreifer besonders vorteilhaft, da die am besten zu handhabenden Flächen in hohem Maße unterschiedlich ausfallen können. So ist es beispielswiese denkbar, dass bei Verwendung eines Sauggreifers mit lediglich einem Saugkopf mit einer großen Saugfläche solche Flächen nicht gehandhabt werden können, deren Breite geringer als der Durchmesser des Saugkopfes ist. Mit dem erfindungsgemäßen Sauggreifer können also Kleinstückgüter unterschiedlicher Größe rasch bearbeitet werden, indem der Saugkopf an die Gegebenheiten des handzuhabenden Kleinstückgutes, genauer die Angriffsfläche des handzuhabenden Kleinstückgutes, angepasst wird.

Der erfindungsgemäße Sauggreifer muss mit einem Manipulator gekoppelt sein, welcher den Sauggreifer im Raum bewegt, d. h. den Saugkopf an die handzuhabende Fläche des aufzunehmenden Kleinstückgutes heranführt. Um das Aufsetzen eines Saugkopfes an einer Fläche zu vereinfachen, ist es bei einer bevorzugten Ausführungsform des erfindungsgemäßen Sauggreifers vorgesehen, dass die Saugarme radial bewegbar ausgebildet sind. Bei einer entsprechenden Ausführungsform ist es also möglich, die beispielsweise letzten Millimeter vor Kontakt zwischen Saugkopf und handzuhabender Angriffsfläche zu überbrücken, indem lediglich der Saugarm radial bewegt wird. Dies vermeidet, dass für die letzten Millimeter der komplette Sauggreifer bewegt werden muss, was aufgrund der Notwendigkeit der räumlichen Bewegung schwieriger ist als lediglich eine Radialbewegung eines Saugarms.

Um eine radiale Bewegbarkeit der Saugarme zu gewährleisten, ist es denkbar, dass jeder Saugarm mit einem eigenen Antrieb gekoppelt ist, der die Radialbewegung des Saugarmes bewirkt. Um die radiale Bewegbarkeit der Saugarme zu gewährleisten, gleichzeitig aber den baulichen Aufwand zu minimieren, ist es bei einer bevorzugten Ausführungsform vorgesehen, dass zwei gegenüberliegende Saugarme als einstückiges Saugelement mit zwei gegenüberliegenden Saugköpfen ausgebildet sind, wobei das Saugelement radial bewegbar ist. Die einstückige Ausbildung des Saugelementes bedingt in einem solchen Fall, dass wenn beispielsweise ein Saugarmabschnitt des Saugelementes zu einem Kleinstückgut verschoben wird, also dieses Saugarmstück ausgefahren wird, das andere Saugarmstück des Saugelementes "eingefahren" wird, was aber für die Funktionalität des Sauggreifers nicht hinderlich ist, da stets lediglich ein Saugarm zum Handhaben eines Kleinstückgutes verwendet wird.

Die Drehbarkeit der Saugarmhalterung sowie die radiale Verschiebbarkeit der Saugarme bedingen, dass der Sauggreifer für den Fall, dass beide Bewegungen getrennt voneinander durchgeführt werden sollen, zumindest zwei Antriebe aufweist - einen für die Drehbewegung der Saugarmhalterung und einen für die Radialbewegung des beispielsweise Saugarmelementes. Um den Sauggreifer baulich trotzdem recht einfach zu halten, ist es bei einer bevorzugten Ausführungsform vorgesehen, dass der Sauggreifer eine Getriebeeinheit umfasst, die gegenüber der Saugarmhalterung an dem Halteelement befestigt ist, wobei die Getriebeeinheit zwei koaxiale Achsen umfasst, wobei die erste Achse mit der Saugarmhalterung zusammenwirkt und eine Rotation dieser bewirkt und die zweite Achse mit dem Saugelement oder einem Saugarm zusammenwirkt und eine Radialbewegung desselben bewirkt.

Erfindungsgemäß ist die Saugarmhalterung des Sauggreifers drehbar an dem Halteelement gelagert. Bei bevorzugten Ausführungsformen sind darüber hinaus die Saugarme bzw. das Saugelement radial bewegbar. Um zu gewährleisten, dass nach einer außerplanmäßigen Unterbrechung des Betriebes oder nach einer Neumontage der Sauggreifer nicht händisch in eine vorgegebene Referenzposition zu verfahren ist, sondern eine definierte Ausrichtung der Saugarmhalterung sowie der Saugarme automatisch erreicht werden kann, ist es bei einer bevorzugten Ausführungsform vorgesehen, dass der Sauggreifer einen Rotations-Taster und die Saugarmhalterung eine Mehrzahl von Rotations-Positionsgebern aufweisen, wobei der Rotations-Taster und die Rotations-Positionsgeber miteinander interagieren können. Um Kenntnis darüber zu haben, in welchem Winkel die Saugarmhalterung steht, wird diese solange verfahren, bis eine Interaktion zwischen dem Rotations-Taster und einem Rotations-Positionsgeber detektiert werden kann. In Abhängigkeit davon, welcher Positionsgeber erkannt wird, kann auf die Winkelposition der Saugarmhalterung rückgeschlossen werden. Alternativ oder zusätzlich umfasst der Sauggreifer zumindest einen Radial-Taster und jeder Saugarm einen Radial-Positionsgeber, wobei Radial-Taster und Radial-Positionsgeber miteinander interagieren können. Bei Unkenntnis der Positionierung eines Saugarmes wird dieser solange radial verfahren, bis eine Interaktion zwischen Taster und Positionsgeber stattfindet, wobei diese Interaktion eine bestimmte vorgegebene Stellung des Saugarmes definiert.

Erfindungsgemäß ist es vorgesehen, dass jeder Saugarm separat mit Unterdruck beaufschlagt werden kann. Wie bereits oben dargelegt, ist es für die Erfindung nicht wesentlich, wie dies rein baulich geschieht. Bei einer konstruktiv einfachen Ausführungsform ist es vorgesehen, dass jeder Saugarm einen Saugstutzen aufweist, der mit einer Saugleitung koppelbar ist, wobei an jeder Saugleitung separat ein Unterdruck anlegbar ist. Die Beaufschlagung mit dem Unterdruck erfolgt also nicht durch die inneren Bauteile des Sauggreifers, sondern von außen, so dass die Bauweise des Sauggreifers recht einfach gehalten werden kann. Bei der Verwendung der Kombination Saugstutzen/Saugleitung ist es auch einfach, ggf. auftretende Leckagen zu beseitigen.

Im Nachfolgenden wird eine bevorzugte Ausführungsform des erfindungsgemäßen Sauggreifers unter Bezugnahme auf die Zeichnung beschrieben, in welcher:
Figuren 1a - 1c verschiedene Ansichten der bevorzugten Ausführungsform des erfindungsgemäßen Sauggreifers zeigen;
Figur 2 eine Schrägansicht der Endeffektoreinheit zeigt;
Figuren 3a und 3b Schrägansichten von an dem Halteelement befestigten Bauteilen zeigen;
Figur 4 eine Schrägansicht der Getriebeeinheit ohne Abdeckung zeigt;
Figuren 5a - 5c verschiedene Ansichten der Saugarmhalterung mit radial unterschiedlichen Stellungen des bei der gezeigten Ausführungsform verwendeten Saugelementes zeigen;
Figuren 6a und 6b verschiedene Ansichten der Saugarmhalterung in einer gedrehten Position zeigen;
Figuren 7a und 7b Detailansichten des Saugarmelementes und von zur radialen Bewegung verwendeten Bauteilen zeigen; und
Figuren 8a und 8b Detailansichten der Getriebeeinheit in Kombination mit der Saugarmhalterung zeigen.

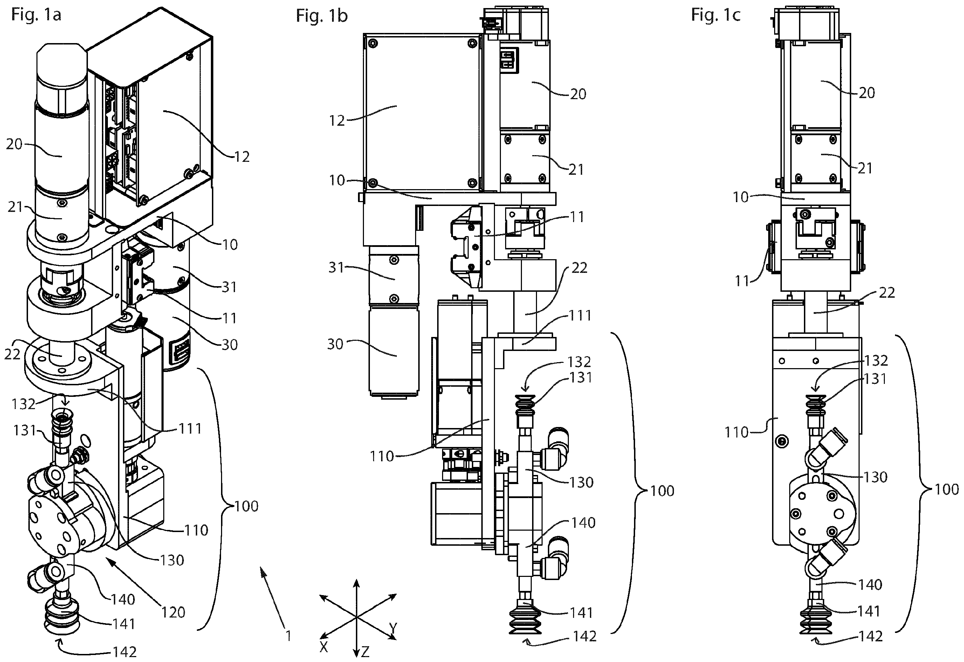

Figuren 1a - 1c zeigen verschiedene Ansichten einer bevorzugten Ausführungsform des erfindungsgemäßen Sauggreifers 1. Die gezeigte Ausführungsform umfasst ein horizontal ausgerichtetes Grundelement 10, auf welchem eine Steuereinrichtung 12 angeordnet ist, welche empfangene Signale in Steuersignale für den Sauggreifer umsetzt. Bei der gezeigten Ausführungsform ist das Grundelement plattenartig ausgeführt und weist einen Ansatz auf. Bei alternativen Ausführungsformen kann das Grundelement auch anders ausgebildet sein. Unter der Steuereinrichtung 12 ist bei der gezeigten Ausführungsform ein Antrieb 30 mit entsprechendem Getriebe 31 befestigt. Das Getriebe ist mit einem (nicht dargestellten) in dem Grundelement aufgenommenen Zahnrad gekoppelt, welches den Sauggreifer entlang einer (ebenfalls nicht dargestellten) Führung in Y-Richtung bewegt. An dieser Führung ist der Sauggreifer mit einem Schlitten 11 befestigt, der über einen Ansatz unterhalb des Grundelements befestigt ist. Die nicht dargestellte Führung für den Schlitten 11 ist Teil eines Manipulators, mittels welchem die Führung entlang der Z- und der X-Achse bewegbar ist.

Auf dem Grundelement 10 ist ferner ein Drehantrieb 20 mit einem dazugehörigen Getriebe 21 angeordnet. Durch eine (nicht dargestellte) Öffnung in dem Grundelement erstreckt sich eine in Z-Richtung ausgerichtete Drehachse 22, an deren unterem Ende eine Endeffektoreinheit 100 angeordnet ist, die über den Drehantrieb 20 drehbar ist. Die Drehachse entspricht in der gezeigten Ausgangsposition einer Vertikal- bzw. Z-Achse des Sauggreifers.

Die Endeffektoreinheit 100 umfasst eine vertikal ausgerichtetes Halteelement 110, das über einen Ansatz 111 mit der Drehachse 22 gekoppelt ist und bei der gezeigten Ausführungsform plattenartig ausgebildet ist. Im unteren Abschnitt des Halteelements 110 ist drehbar eine Saugarmhalterung 120 angeordnet. Die Saugarmhalterung umfasst bei der gezeigten Ausführungsform zwei Saugarme 130, 140, die bei ihren distalen Enden jeweils einen Saugkopf 131, 141 aufweisen. Die beiden Saugköpfe 131, 141 haben erfindungsgemäß unterschiedlich dimensionierte Saugflächen 132, 142. Bei der gezeigten Ausführungsform sind die Saugflächen selbst kreisförmig ausgebildet, was jedoch für die Erfindung selbst nicht wesentlich ist. Wesentlich ist vielmehr, dass die Saugarmhalterung drehbar ist, so dass in Abhängigkeit von der anzusaugenden Fläche der Saugkopf mit der passenden Saugfläche durch ein Drehen der Saugarmhalterung in Position gebracht werden kann.

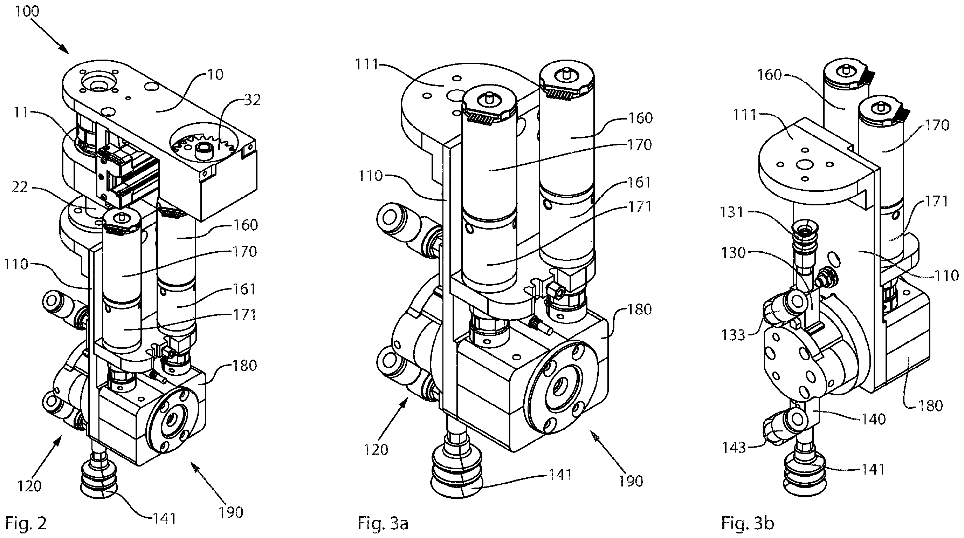

Figur 2 zeigt eine Schrägansicht der Endeffektoreinheit 100. Bei Figur 2 ist gegenüber der Saugarmhalterung 120 eine Getriebeeinheit 190 mit einer Abdeckung 180 zu erkennen. Über der Getriebeeinheit 190 sind zwei Antriebe 160, 170 mit dazugehörigen Getrieben 161, 171 zu erkennen. Die beiden Antriebe 160, 170 sind zum einen zum Drehen der Saugarmhalterung 120 und zum anderen zum radialen Bewegen der Saugarme vorgesehen, wie dies unter Bezugnahme auf nachfolgende Figuren detailliert beschrieben ist. In Figur 2 ist in einer Öffnung des Grundelements 10 ein Zahnrad 32 zu erkennen, welches mit der in den Figuren 1a - 1c gezeigten Antriebseinheit 30 zusammenwirkt, und über welches der Sauggreifer selbst an der (nicht dargestellten) Führung bewegbar ist.

Figuren 3a und 3b zeigen detaillierte Schrägansichten von an dem Halteelement 110 befestigten Bauteilen, nämlich der Saugarmhalterung 120. In Figur 3b ist deutlich zu erkennen, dass an den Saugarmen 130, 140 Saugstutzen 133, 143 angeordnet sind, über welche die Saugarme separat mit Unterdruck beaufschlagt werden können. Im Betrieb sind die Saugstutzen 133, 143 über nicht dargestellte Leitungen mit einer Unterdruckquelle verbunden, und zwar derart, dass die Saugarme 130, 140 separat mit Unterdruck beaufschlagt werden können.

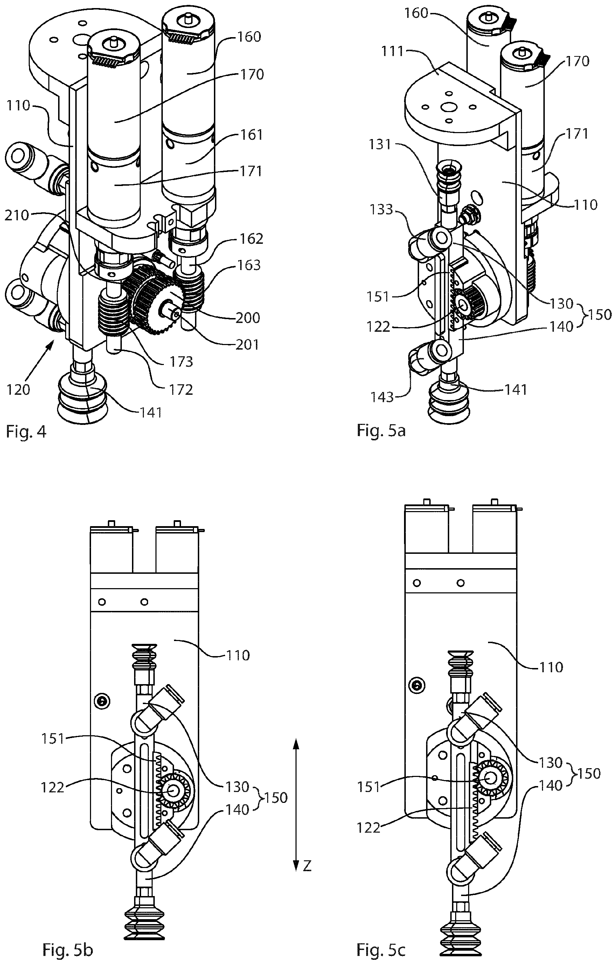

Figur 4 zeigt die Ansicht gemäß Figur 3a, jedoch ohne Gehäuse 180 der Getriebeeinheit 190. Bei Figur 4 ist zu erkennen, dass sich den Antrieben 160, 170 zugeordnete Drehachsen 162, 172 in die Getriebeeinheit erstrecken und bei ihren unteren Enden Schneckenzahnräder 163, 173 aufweisen, die mit Zahnrädern 200, 210 zusammenwirken, die an zwei koaxialen Wellen befestigt sind, von denen bei Figur 4 lediglich die innere Welle 201 zu erkennen ist. Mittels der Kombination der Schneckenräder und der Zahnräder wird die Drehbewegung der den Antrieben 160, 170 zugeordneten Drehachsen 162, 172 in eine Drehbewegung der orthogonal ausgerichteten koaxialen Wellen umgewandelt.

Figuren 5a - 5c zeigen Detailaufnahmen der Saugarmhalterung 120, wobei bei den Figuren 5a - 5c die Abdeckung der Saugarmhalterung fortgelassen ist, so dass die inneren Bauteile sichtbar sind. Bei der gezeigten Ausführungsform sind die Saugarme 130, 140 Teil eines einstückigen Saugarmelementes 150, welches durch einen Freiraum in der Saugarmhalterung geführt ist. Das Saugarmelement 150 weist eine Zahnstange 151 auf, die mit einem Zahnrad 122 zusammenwirkt, welches über ein in den Figuren 5a - 5c nicht dargestelltes weiteres Zahnrad mit einer der koaxialen Wellen gekoppelt ist. Wie dies in den Figuren 5b, 5c zu erkennen ist, kann das Saugarmelement 150 durch eine Drehbewegung des Zahnrades 122 in Richtung des zwischen den Figuren dargestellten Pfeiles in Z-Richtung bewegt werden, wobei der Aufbau des Saugarmelementes bedingt, dass wenn der untere Saugarmabschnitt 140 nach unten bewegt wird, auch der obere Saugarmabschnitt 130 nach unten bewegt wird, wobei dies für die Funktionalität des Sauggreifers nicht hinderlich ist, da stets nur ein einem aufzunehmenden Kleinstückgut zugewandter Saugkopf verwendet wird.

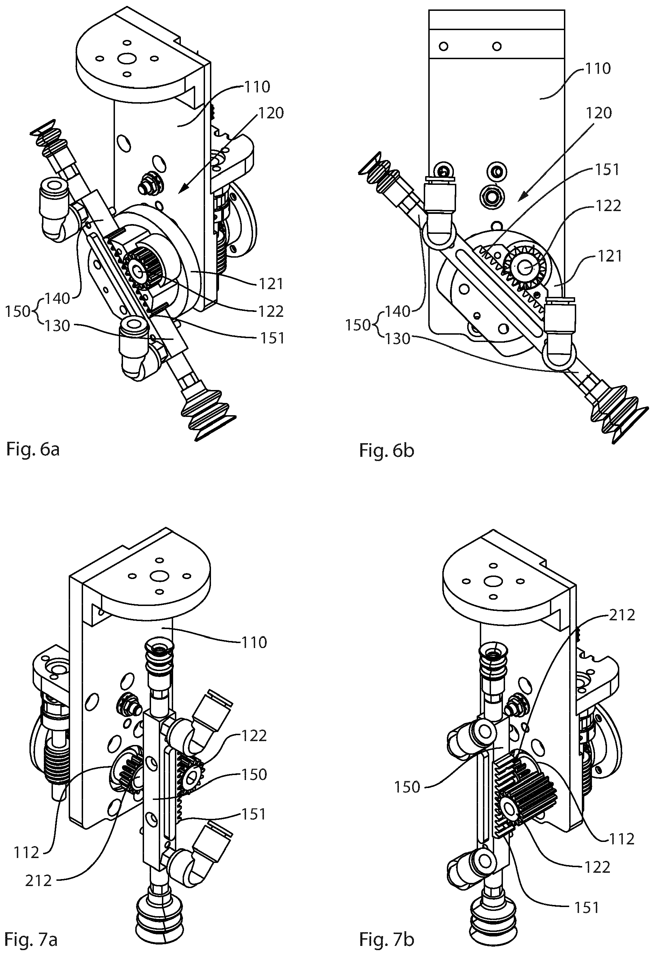

Die Figuren 6a und 6b zeigen Detailansichten der Saugarmhalterung 120. Diese umfasst einen Grundkörper 121 sowie auf diesem angeordnete Bauteile wie das Zahnrad 122 und das Saugarmelement. Bei den Figuren 6a und 6b ist die Saugarmhalterung um 45 Grad gedreht. Wie bei einem Vergleich mit den Figuren 5b und 5c zu erkennen ist, dreht sich das Zahnrad 122 bei einer Drehbewegung der Saugarmhalterung mit, bleibt aber gleichzeitig gekoppelt mit einem nicht sichtbaren Zahnrad im Inneren der Saugarmhalterung.

Diese Kopplung ist in den Figuren 7a und 7b zu erkennen. Durch Fortlassen von weiteren Bauteilen der Saugarmhalterung ist zu erkennen, dass eine der koaxialen Wellen, die sich durch eine Öffnung 112 in dem Halteelement 110 erstrecken, ein Zahnrad 212 aufweist. Dieses ist, wie dies in Figur 7b zu erkennen ist, mit Zahnrad 122 gekoppelt, welches wiederrum mit der Zahnstange 151 gekoppelt ist. Mittels der Getriebeeinheit wird die Drehbewegung eines der Antriebe also in eine Drehbewegung der Saugarmhaltung und die Drehbewegung des anderen Antriebes in eine radiale Bewegung des Saugarmelements umgesetzt.

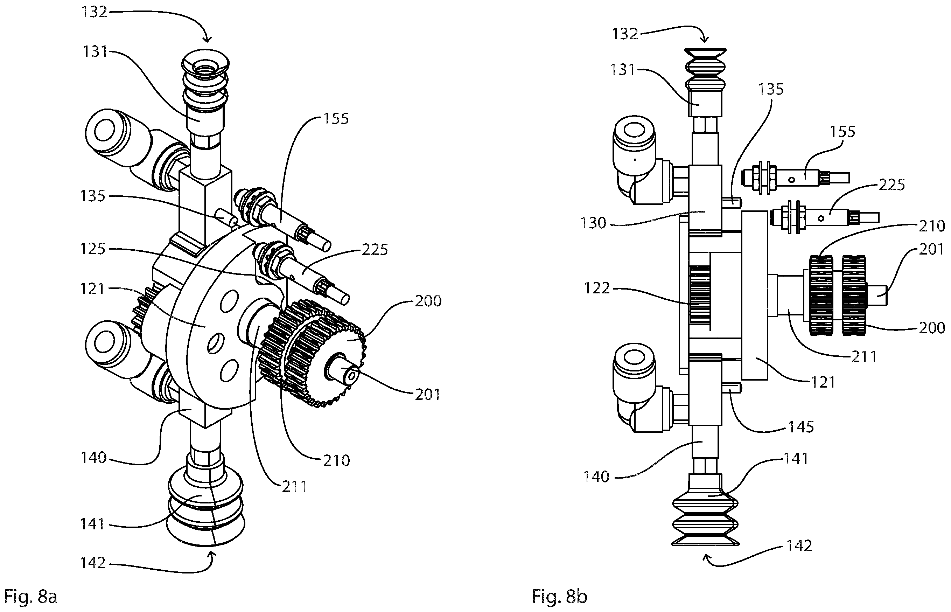

Figuren 8a und 8b zeigen Detailaufnahmen der Getriebeeinheit sowie der Saugarmhalterung, wobei das diese Baueinheiten trennende Halteelement 110 fortgelassen ist. Bei Figuren 8a und 8b sind die beiden koaxialen Wellen 201, 211 zu erkennen, auf denen die Zahnräder 200, 210 angeordnet sind, wobei Zahnrad 200 mit der Welle 201 und Zahnrad 210 mit der Welle 211 interagiert. Eine Rotation der Welle 201 bewirkt eine Rotation des Zahnrades 212, welches in Figuren 7a, 7b dargestellt ist, wobei diese Rotation letztendlich zu einer Radialbewegung des Saugarmelementes 150 führt. Eine Rotation der äußeren Welle 211, die mit dem Zahnrad 210 gekoppelt ist, bedingt eine Rotation der Saugarmhalterung selbst.

In den Figuren 8a, 8b sind ferner der Radial-Taster 155 und der Rotations-Taster 225 zu erkennen. Der Radial-Taster 155 interagiert mit Radial-Positionsgebern 135, 145, die jeweils den Saugarmabschnitten 130, 140 des Saugarmelementes 150 zugeordnet sind. Der Rotations-Taster 225 interagiert mit Rotations-Positionsgebern 125, die bei der gezeigten Ausführungsform als Kanten in dem Grundkörper 121 der Saugarmhalterung 120 ausgeführt sind. Für den Fall eines außerplanmäßigen Neustarts des Sauggreifers kann es vorkommen, dass die Steuereinrichtung die genaue Position des Saugelements und/oder der Saugarmhalterung kennt. Um die genaue Ausrichtung bzw. Stellung der Saugarmhaltung und des Saugelements zu ermitteln wird die Saugarmhaltung so lange gedreht, bis mittels des Rotations-Tasters ein Rotations-Positionsgeber ermittelt wird. Die Ermittlung eines Rotations-Positionsgebers bedingt aufgrund der bei dieser Ausführungsform gewählten Anordnung Radial-Positionsgeber/Saugarmelement, dass das Saugarmelement bei Erkennen eines Rotations-Positionsgebers senkrecht angeordnet ist. Im Anschluss wird dann das Saugelement so lange verfahren bis der Radial-Taster einen der Radial-Positionsgeber ermittelt.

## Patentansprüche

1. Sauggreifer (1) zum Handhaben von Kleinstückgütern, aufweisend:
ein Grundelement (10),
einen an dem Grundelement (10) angeordneten Drehantrieb (20) mit einer in Ausgangsposition vertikalen Drehachse (22),
eine mit der Drehachse (22) gekoppelte Endeffektoreinheit (100), wobei die Endeffektoreinheit (100) ein Halteelement (110) aufweist, an welchem eine Saugarmhalterung (120) befestigt ist, wobei die Saugarmhalterung (120) zumindest zwei langgestreckte Saugarme (130, 140) aufweist, die bei ihrem distalen Ende jeweils einen Saugkopf (131, 141) mit einer Saugfläche (132, 142) aufweisen, wobei die Saugarme (130, 140) derart ausgebildet sind, dass sie mit einem Unterdruck beaufschlagt werden können,
**dadurch gekennzeichnet, dass** die Saugarmhalterung (120) drehbar an dem Halteelement (110) gelagert ist und die Saugflächen (132, 142) der Saugköpfe (131, 141) zum Handhaben unterschiedlicher Arten von Kleinstückgütern unterschiedlich dimensioniert sind.

2. Sauggreifer (1) zum Handhaben von Kleinstückgütern nach Anspruch 1, **dadurch gekennzeichnet, dass** zumindest einer der Saugarme (130, 140) radial bewegbar ausgebildet ist.

3. Sauggreifer (1) zum Handhaben von Kleinstückgütern nach Anspruch 2, **dadurch gekennzeichnet, dass** zwei Saugarme (130, 140) als einstückiges Saugarmelement (150) mit zwei gegenüberliegenden Saugköpfen (131, 141) ausgebildet sind, wobei das Saugarmelement (150) radial bewegbar ist.

4. Sauggreifer (1) zum Handhaben von Kleinstückgütern nach Anspruch 3, **dadurch gekennzeichnet, dass** der Sauggreifer eine Getriebeeinheit (190) umfasst, die gegenüber der Saugarmhalterung (120) an dem Halteelement (110) befestigt ist, wobei die Getriebeeinheit (190) zwei koaxiale Achsen (201, 211) umfasst, wobei die erste Achse (211) mit der Saugarmhalterung (120) zusammenwirkt und eine Rotation dieser bewirkt und die zweite Achse (201) mit dem Saugarmelement (150) zusammenwirkt und eine Radialbewegung dieses bewirkt.

5. Sauggreifer (1) zum Handhaben von Kleinstückgütern nach einem der Ansprüche 1 - 4, **dadurch gekennzeichnet, dass** der Sauggreifer zumindest einen Radial-Taster (155) und jeder Saugarm (130, 140) einen Radial-Positionsgeber (135, 145) aufweist, wobei Radial-Taster (155) und Radial-Positionsgeber (135, 145) miteinander interagieren können.

6. Sauggreifer (1) zum Handhaben von Kleinstückgütern nach einem der Ansprüche 1 - 5, **dadurch gekennzeichnet, dass** der Sauggreifer einen Rotations-Taster (225) aufweist und die Saugarmhalterung (120) eine Mehrzahl von Rotations-Positionsgebern (125) aufweist, wobei Rotations-Taster (225) und Rotations-Positionsgeber (125) miteinander interagieren können.

7. Sauggreifer (1) zum Handhaben von Kleinstückgütern nach einem der Ansprüche 1 - 6, **dadurch gekennzeichnet, dass** jeder Saugarm (130, 140) einen Saugstutzen (133, 143) aufweist, der mit einer Saugleitung koppelbar ist, wobei an jede Saugleitung separat ein Unterdruck anlegbar ist.
